(19) Europäisches Patentamt

European Patent Office

Office européen des brevets

(11) Veröffentlichungsnummer: **0 315 897 B1**

## (12) EUROPÄISCHE PATENTSCHRIFT

(45) Veröffentlichungstag der Patentschrift:
25.09.91 Patentblatt 91/39

(21) Anmeldenummer: 88118339.6

(22) Anmeldetag: 04.11.88

(51) Int. Cl.⁵: **B60B 3/08, B60B 1/08, B60B 25/20, B60B 23/10, B60B 3/06**

(54) **Felge für Kraftfahrzeuge.**

(30) Priorität: 12.11.87 DE 3738362

(43) Veröffentlichungstag der Anmeldung:
17.05.89 Patentblatt 89/20

(45) Bekanntmachung des Hinweises auf die
Patenterteilung:
25.09.91 Patentblatt 91/39

(84) Benannte Vertragsstaaten:
CH DE FR GB IT LI NL

(56) Entgegenhaltungen:
DE-A- 1 948 124
DE-A- 2 361 066
FR-A- 552 782
FR-A- 1 135 234

(73) Patentinhaber: Dietz-Metall GmbH & Co. KG
Kelterstrasse
W-7441 Unterensingen (DE)

(72) Erfinder: Bauer, Hans
Gutenbergerstrasse 20
W-7311 Dettingen (DE)

(74) Vertreter: Cast, Adolf, Dipl.-Ing.
Schmaltalstrasse 13
W-7318 Lenningen 1 (DE)

## Beschreibung

Die Erfindung bezieht sich auf eine Feige für Kraftfahrzeuge gemäß Oberbegriff von Anspruch 1.

Aus der FR-A-552782 ist eine Felgenausführung bekannt, bei der die einzelnen Bestandteile der Felge, also auch die Zwischenscheiben, zunächst gegossen und dann geschmiedet bzw. in einer Matritze hergestellt werden. Hierbei handelt es sich also um einen sehr unwirtschaftlichen und teueren Fertigungsprozeß, der besonders bei einer Massenfertigung sich ungünstig auswirkt und der es auch nur unter erheblichem Aufwand erlauben würde, die Zwischenscheiben mit einem Muster zu versehen. Es sind nur geringe Variationsmöglichkeiten in der Gestaltung der Felgenkörper möglich, eine Änderung des Designs ist wegen der damit verbundenen hohen Werkzeugkosten außerordentlich aufwendig.

Aufgabe der vorliegenden Erfindung ist daher die Schaffung einer Felge für Kraftfahrzeuge der eingangs genannten Art, die bei möglichst geringem Gewicht eine hohe Festigkeit aufweist und in jedem gewünschten Design hergestellt werden kann.

Diese Aufgabe wird erfindungsgemäß durch die im kennzeichnenden Teil des Anspruchs 1 angegebenen Merkmale gelöst.

Es bieten sich die verschiedensten Gestaltungsmöglichkeiten für das Felgendesign wie auch für die Verwendung von verschiedenen Werkstoffen. So lassen sich z.B. Scheiben aus Leichtmetallguß mit Stahl- oder Kunststoffscheiben kombinieren. Bei Verwendung eines Speichenmusters bei beiden Scheiben ergibt sich durch die Kombination in zwei Ebenen ein besonders ansprechendes Design.

Werden die beiden Scheiben durch Schrauben miteinander verbunden, so ergibt sich eine elastisch nachgiebige Verbindung, die sich besonders bei Wechselbeanspruchung vorteilhaft auswirkt.

Die durch die geringere Wandstärke mögliche Herstellung in Leichtmetall-Guss erlaubt die Wahl der verschiedensten Muster durch Verwendung von verschiedenen Einsätzen im Gusswerkzeug. Dabei ergeben sich besonders günstige Werkzeugkosten, da auch gewünschte Lochkreisdurchmesser und Bremsfreigängigkeit durch auswechselbare Einsätze erzielbar sind. Der nachträgliche Bearbeitungsaufwand ist dadurch erheblich reduziert und es kann in Großserien gefertigt werden.

Der Gießvorgang wird einfacher und preisgünstiger und das Gussteil genauer, so daß der nachträgliche Bearbeitungsaufwand auf ein Minimum beschränkt wird.

Bei der Verbindung des Felgenbettes mit dem Felgenkörper sind ebenfalls die verschiedensten Ausführungsformen möglich. Die Halbschalen des Felgenbettes können entweder außen an den Scheiben des Felgenkörpers oder zwischen diesen angeordnet sein. Ebenso ist es möglich, ein einteiliges Felgenbett mit den beiden Scheiben zu verbinden, wobei keine Dichtprobleme auftreten.

Im folgenden sind Ausführungsbeispiele der Erfindung unter Bezugnahme auf die Zeichnungen näher beschrieben.

Es zeigen :

Fig. 1    Querschnitt entlang der Speichenfelge
Fig. 2    Felge von der Sichtseite
Fig. 3-7    Teilschnitte im Außenbereich der Felge.

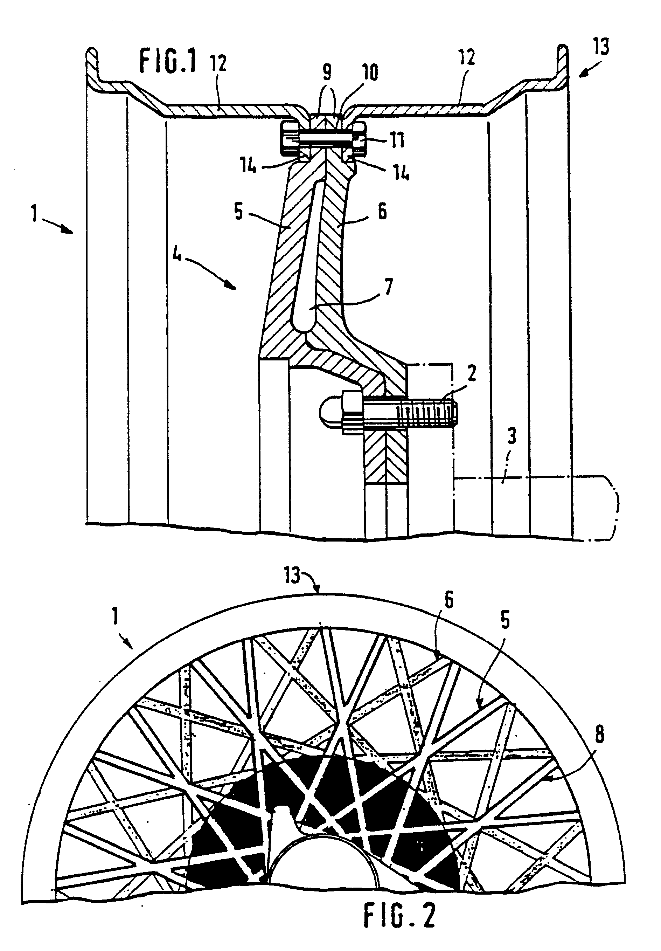

Die in Fig. 1 dargestellte Felge 1 ist in bekannter Weise mit Schrauben 2 mit der Achse 3 eines Automobils verbunden.

Der Felgenkörper 4 besteht aus den beiden Scheiben 5 und 6, die in ihrem Innenbereich topfförmig aneinander anliegen und daran anschließend einen sich nach außen verjüngenden Zwischenraum 7 aufweisen. Wie Fig. 2 zeigt, kann dabei mindestens eine Scheibe 5 ein Speichenmuster 8 aufweisen.

In ihrem Außenbereich sind die Scheiben 5 und 6 mit Außenringen 9 versehen, die Durchgangsbohrungen 10 aufweisen. An diesen Außenringen 9 sind mit Schrauben 11 die beiden Halbschalen 12 des Felgenbetts 13 mit ihren Befestigungsringen 14 angeschraubt.

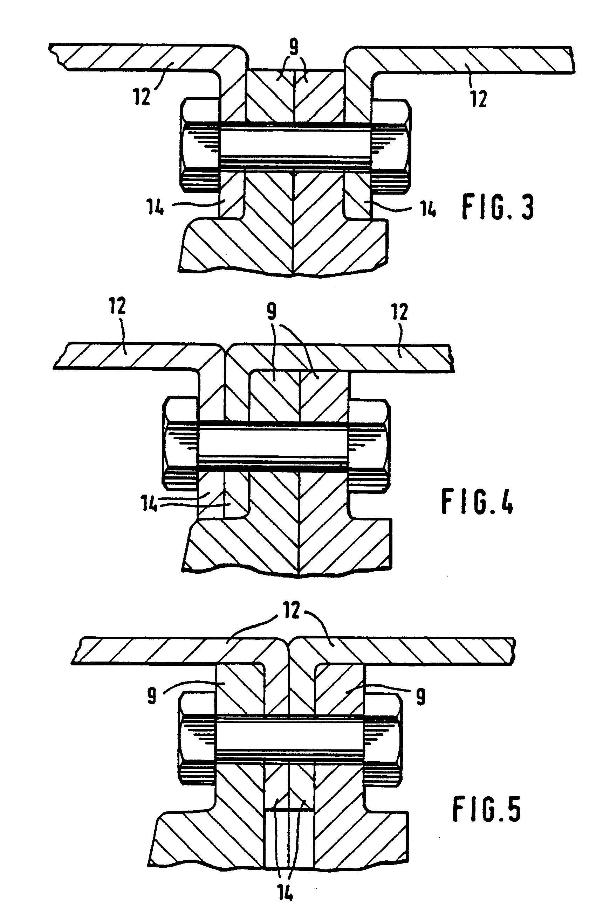

Dabei zeigen die Fig. 3-6 verschiedene Möglichkeiten, die Halbschalen 12 an den Außenringen 9 zu befestigen. Z.B. zeigt Fig. 3 die Befestigung der Befestigungsringe 14 an den Außenflächen der Außenringe 9, Fig. 4 zeigt die Befestigung der Befestigungsringe 14 aneinander anliegend an nur einer Außenflächen von Außenring 9 und Fig. 5 zeigt die Befestigung der Befestigungsringe 14 zwischen den beiden Außenringen 9.

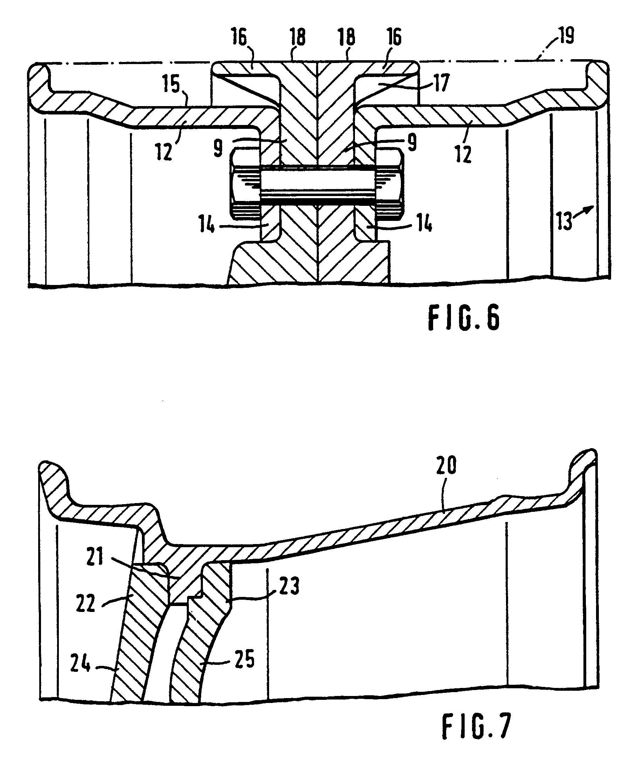

Fig. 6 zeigt die Möglichkeit, die erfindungsgemäße Felge auch mit Notlaufeigenschaften des Reifens zu verwenden. Dabei überragen die Außenringe 9 der Scheiben 5,6 die Innenflächen 15 der Halbschalen 12 und sind an ihrem äußeren Ende mit axialen Stützringen 16 versehen. Diese werden durch Rippen 17 gegen die Außenringe 9 abgestützt. Die Mantelflächen 18 der Stützringe 16 fluchten dabei mit der Außenfläche 19 des Felgenbetts 13. Damit wird der platte Reifen im Notlauf durch die Stützringe 16 abgestützt.

Bei einer besonders vorteilhaften Ausführungsform gemäß Fig. 7 ist das Felgenbett 20 einteilig ausgeführt und mit seinem Befestigungsring 21 an den Außenringen 22 und 23 der beiden Scheiben 24 und 25 lösbar befestigt. Damit ist eine sichere Verbindung ohne Dichtprobleme gewährleistet.

## Patentansprüche

1. Felge (1) für Kraftfahrzeuge mit einem aus mindestens zwei Scheiben (5, 6) gebildeten Felgenkörper (4), wobei mindestens eine Scheibe (5) aus Leichtmetall hergestellt ist und wobei die Scheiben (5, 6) in ihrem Außenbereich Außenringe (9) aufweisen, mit denen das Felgenbett (13) lösbar verbunden ist, **dadurch gekennzeichnet**, daß mindestens eine der beiden Scheiben (5, 6) aus Leichtmetall-Guß oder kunststoff-Spritzguß hergestellt ist und daß beide Scheiben (5, 6) jeweils ein durchbrochenes Muster (8) aufweisen, die zusammen ein kombiniertes Muster ergeben.

2. Felge nach Anspruch 1, **dadurch gekennzeichnet**, daß mindestens ein Befestigungsring (14, 21) des Felgenbett (13, 20) mit den Außenringen (9, 22, 23) der Scheiben (5, 6, 24, 25) verbunden ist.

3. Felge nach Anspruch 2, **dadurch gekennzeichnet**, daß die Befestigungsringe (14, 21) des Felgenbetts (13, 20) zwischen die Außenringe (9, 22, 23) der Scheiben (5, 6, 24, 25) eingreifen.

4. Felge nach Anspruch 2, **dadurch gekennzeichnet**, daß die Außenringe (9) die Innenflächen (15) der Halbschalen (12) überragen und an ihrem äußeren Ende mit axialen Stützringen (16) versehen sind.

5. Felge nach Anspruch 4, **dadurch gekennzeichnet**, daß die Mantelflächen (18) der Stützringe (16) mit der Außenfläche (19) des Felgenbetts (13) fluchten.

6. Felge nach einem der Ansprüche 1 bis 5, **dadurch gekennzeichnet**, daß die Scheiben (5, 6, 24, 25) aus verschiedenen Werkstoffen bestehen.

## Claims

1. Wheel rim (1) for vehicles having a wheel rim body (4) formed from at least two discs (5, 6), at least one disc (5) being produced from lightweight metal and the discs (5, 6) having outer rings (9) in their outer region, with which rings the wheel rim bed (13) is detachably connected, characterised in that at least one of the two discs (5, 6) is produced from cast lightweight metal or injection moulded plastic and in that both discs (5, 6) each have an open-worked pattern (8), which patterns together give a combined pattern.

2. Wheel rim according to Claim 1, characterised in that at least one fixing ring (14, 21) of the wheel rim bed (13, 20) is connected to the outer rings (9, 22, 23) of the discs (5, 6, 24, 25).

3. Wheel rim according to Claim 2, characterised in that the fixing rings (14, 21) of the wheel rim bed (13, 20) engage between the outer rings (9, 22, 23) of the discs (5, 6, 24, 25).

4. Wheel rim according to Claim 2, characterised in that the outer rings (9) project beyond the inner surfaces (15) of the half-shells (12) and are provided at their outer end with axial back-up rings (16).

5. Wheel rim according to Claim 4, characterised in that the top surfaces (18) of the back-up rings (16) are aligned with the outer surface (19) of the wheel rim bed (13).

6. Wheel rim according to one of Claims 1 to 5, characterised in that the discs (5, 6, 24, 25) are made of different materials.

## Revendications

1. Jante (1) pour véhicules automobiles avec un corps (4) formé d'au moins deux disques (5, 6), dont au moins un disque (5) est en métal léger et les deux disques présentent dans leur zone extérieure des anneaux de jante extérieurs (9) avec lesquels la gorge (13) de la jante est reliée de façon amovible, **caractérisée en ce que** au moins l'un des deux disques (5, 6) est coulé en métal léger ou moulé par injection de matière plastique et que les deux disques (5, 6) présentent chacun un dessin ajouré (8) donnant ensemble un dessin combiné.

2. Jante selon la revendication 1, **caractérisée en ce que** au moins un collier de fixation (14, 21) de la gorge (13, 20) est relié avec les colliers extérieurs (9, 22, 23) des disques (5, 6, 24, 25).

3. Jante selon la revendication 2, **caractérisée en ce que** les colliers de fixation (14, 21) de la gorge (13, 20) engrènent entre les colliers extérieurs (9, 22, 23) des disques (5, 6, 24, 25).

4. Jante selon la revendication 2, **caractérisée en ce que** les colliers extérieurs (9) dépassent en hauteur les faces intérieures (15) des demi-coquilles (12) et sont munis sur leur extrémité extérieure de bagues d'appui axiales (16).

5. Jante selon la revendication 4, **caractérisée en ce que** les surfaces latérales (18) des bagues d'appui (16) sont en alignement avec les surfaces extérieures (19) de la gorge (13).

6. Jante selon l'une des revendications 1 à 5, **caractérisée en ce que** les disques (5, 6, 24, 25) sont réalisés en différents matériaux.

4

FIG.1

FIG.2

FIG. 3

FIG.4

FIG.5

FIG.6

FIG.7

7